Europäisches Patentamt

European Patent Office

Office européen des brevets

(11) Publication number: **0 493 616 A1**

# EUROPEAN PATENT APPLICATION
## published in accordance with Art. 158(3) EPC

(21) Application number: 91913086.4

(22) Date of filing: 22.07.91

(86) International application number:
**PCT/JP91/00972**

(87) International publication number:
**WO 92/01533 (06.02.92 92/04)**

(51) Int. Cl.⁵: **B23Q 15/18**, B23Q 1/02

(30) Priority: **24.07.90 JP 198479/90**
    **24.07.90 JP 198480/90**

(43) Date of publication of application:
**08.07.92 Bulletin 92/28**

(84) Designated Contracting States:
**DE**

(71) Applicant: **HAMAI CO., LTD.**
**5-15, Nishi-Gotanda 5-chome**
**Shinagawa-ku, Tokyo 141(JP)**
Applicant: **Hatamura, Yotaro**

**12-11, Kohinata 2-chome**
**Bunkyo-ku Tokyo112(JP)**

(72) Inventor: **HATAMURA, Yotaro**
**12-11, Kohinata 2-chome, Bunkyo-ku**
**Tokyo 112(JP)**

(74) Representative: **Patentanwälte Grünecker,**
**Kinkeldey, Stockmair & Partner**
**Maximilianstrasse 58**
**W-8000 München 22(DE)**

(54) SYSTEM FOR CONTROLLING POSTURES OF STRUCTURES AND MACHINE TOOLS.

(57) A system for controlling postures of structures and workpieces, which is used for correcting and controlling the positions of various industrial machines. An object of the present invention is to correct very small displacements of the structures due to thermal expansion and elastic deformation or to control the positions thereof. The amount of displacement of a structure (1) in the axial direction is detected by laser length measuring machines (4, 5), and in accordance with the amount of displacement, a heater (3) is operated or cooling water is supplied through a cooling water path (2). With this operation, the structure (1) is expanded or shrunk, so that its position is controlled and corrected.

Fig. 28

Field of the Invention

This invention relates to an attitude control device for structures which enables position correction and extremely accurate position control for various industrial machines and measuring devices. This invention further relates to an attitude control device for machine tools which prevents degradation of processing accuracy caused by positional change of the tool due to temperature rising at the tool driving part or reaction force at the tool of machine tools such as machining centers.

Background of the Invention

As a means to improve processing accuracy or measuring accuracy of various machine tools and measuring devices, efforts have been conventionally made to increase rigidity of structure members of the machines and devices. Increased rigidity reduces strain generated against the load applied to structure members and thereby prevents the accuracy degradation due to elastic deformation and deflection of structure members to some extent.

When extremely accurate processing or measurement with further improved accuracy is desired, however, thermal displacement of members caused by temperature difference generated among the members of machines and devices results in dimensional change among their structure members and impedes improvement of accuracy.

For machine tools such as a machining center, in particular, heat generated at the tool driving motor or its decelerating mechanism is transmitted to the head and the column supporting the head during processing of workpieces. This causes the temperature at the head and column to rise with elapse of time, which results in their thermal expansion. In addition, reaction force generated at the tool during workpiece processing may cause slight elastic deformation corresponding to the reaction force at the head and column supporting the tool. When such thermal expansion or elastic deformation is caused, processing accuracy is degraded due to slight change in tool position.

Fig. 39 is an explanatory view showing a model of thermal expansion and elastic deformation at a machining center. In the figure, the heat generated at the tool 201 and tool driving motor 203 installed on the head 202 is transmitted from the head 202 to the column 204. This causes temperature gradient at the column 204 leading to further thermal expansion on the right side, which results in warp of the whole structure to the left. As a result, the tool 201 is moved from the proper level L0 to the level L1, which may adversely affect the processing accuracy.

A conventional solution to this problem was circulation of cooling oil or cooling water in the head 202 where the tool 201 is mounted in order to cool down the tool driving motor 203 and its decelerating mechanism generating the heat and eliminate the affect of thermal expansion.

Another solution was to correct the coordinates of the head 202 through numerical control (NC) corresponding to the extent of heat generation. Another solution called thermal displacement control has been also attempted with mounting a counter heater 205 at a part of the left rear side of the column 204. In this method, such counter heater 205 is heated corresponding to the heat transmitted to the column 204 so as to eliminate the temperature gradient and warp (Seimitsu Kougakukai JSPE-55-09 '89-09-1706).

It is difficult, however, to detect displacement at the tool 201 caused by the heat generated during operation with these solutions. In addition, values detected as displacement are always fluctuating and it is impossible to always provide optimum correction.

With the thermal displacement control, in particular, warp of the whole column 204 of the machining center is detected with laser beam as the movement of the top surface on the column 204 and the counter heater 205 is controlled (turned on and off) for correction of the change in straightness of the column 204. Though this control method is certainly capable of maintaining the straightness with an accuracy of ± 2 μm/m at any time, vertical displacement of the column 204 cannot be corrected at all.

Further, it cannot correct thermal expansion of the head 202 where the motor 203, which is the heat generation source, is mounted. Accordingly, it is impossible for this method to completely compensate the degradation of processing accuracy caused by thermal displacement.

This invention is intended to solve the above problem. The object of this invention is to provide an attitude control device for structures and machine tools, which corrects slight displacement caused by thermal expansion and/or elastic deformation and enables position control with a higher accuracy.

Disclosure of the Invention

An attitude control device for a structure according to this invention consists of actuators which are

2

EP 0 493 616 A1

installed on a structure having a high rigidity and deform the structure in the range of elastic or thermal deformation, displacement sensors to detect the displacement amount at the deformed area of the structure deformed by said actuators, and a controller which generates actuator driving signals to maintain the length of the structure as desired based on the displacement amount detected by said displacement sensors.

This configuration enables precise control of length and attitude of a structure through its deformation adjusted by the controller, which drives actuators when any displacement is generated at the structure.

An attitude control device for a machine tool according to this invention consists of at least a pair of thermal column actuators which is opposingly disposed on circumference of a hollow column fixing and supporting a head to hold and drive a tool to a fixing base and which heats or cools column walls to generate thermal displacement, displacement sensors installed on the column walls provided with thermal column actuators to detect the displacement amount at the column walls caused by temperature change or reaction force at tool during processing and a controller which outputs thermal actuator controlling signals to expand or contract the column so as to maintain the tool position as predetermined corresponding to the displacement amount detected by said displacement sensors.

In the above device, the controller drives the thermal actuators to expand or contract the column upon generation of displacement at column walls. As a result, the tool can be maintained at a predetermined position and thereby improving the working accuracy of the machine tool.

Brief Description of the Drawings

Fig. 1 is a perspective view of an embodiment of attitude control device according to this invention;
Fig. 2 is a longitudinal section of the embodiment shown in Fig. 1;
Fig. 3 is a plane view of another embodiment;
Fig. 4 is a front view of the embodiment in Fig. 3;
Figs. 5 to 8 are explanatory views to illustrate operation of the embodiment shown in Figs. 3 and 4;
Fig. 9 is a front view of another embodiment;
Figs. 10 and 11 are explanatory views to illustrate operation of the embodiment shown in Fig. 9;
Fig. 12 is a perspective view of an embodiment of another actuator;
Fig. 13 is a perspective view of another embodiment;
Fig. 14 is a perspective view of the main part of the embodiment shown in Fig. 13;
Figs. 15, 16 and 17 are longitudinal sections to illustrate embodiments of actuators;
Fig. 18 is a cross-sectional view taken on line A-A of Fig. 17;
Fig. 19 is a longitudinal section of another embodiment of actuator;
Fig. 20 is a cross-sectional view taken on line B-B of Fig. 19;
Fig. 21 is a longitudinal section of another embodiment of actuator;
Figs. 22 and 23 are perspective views of another embodiment;
Fig. 24 is a perspective view of another embodiment;
Fig. 25 is a perspective view of still another embodiment;
Fig. 26 is a cross-sectional view of an embodiment where an attitude control device according to this invention is applied to a machining center;
Fig. 27 is a cross-sectional view taken on line C-C of Fig. 26;
Fig. 28 is a diagram of the main part of another embodiment;
Fig. 29 is a transverse sectional view of the embodiment in Fig. 28;
Fig. 30 is a cross-sectional view taken on line D-D of Fig. 29;
Figs. 31 to 34 are explanatory views to illustrate control modes of the column;
Figs. 35 to 38 are explanatory view to illustrate control modes of the head; and
Fig. 39 is an explanatory view to illustrate conventional thermal displacement generation.

Detailed Description of the Invention

The present invention is further clarified in the following description referring to the attached drawings.

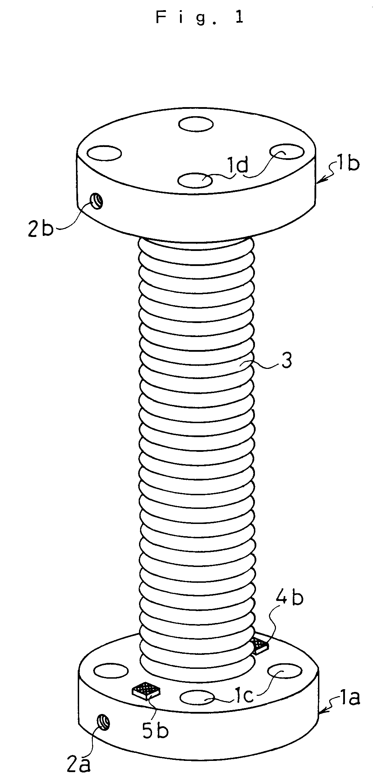

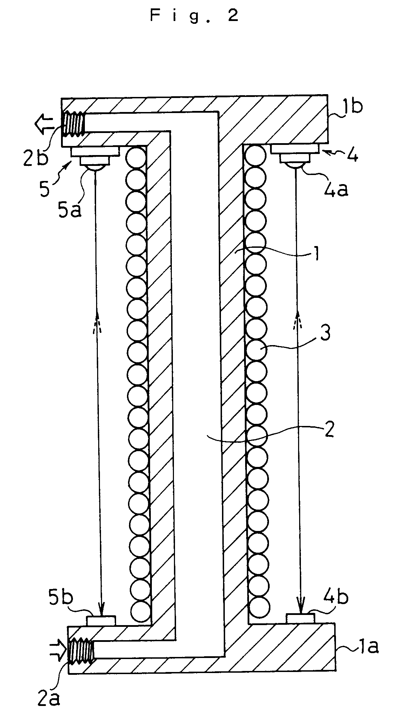

First referring to Figs. 1 and 2, a bar-shaped structure 1 provided with flanges 1a and 1b at the lower and upper ends has a cooling water channel 2 in it for circulation of cooling water. Cooling water supplied from an inlet 2a formed at the side face of the flange 1a passes along the cooling water channel 2 and is discharged from the outlet 2b formed at the side face of the flange 1b. A heater 3 is uniformly wound around the outer circumference of the structure 1 so that it can heat the structure 1 from the outer surface.

A pair of laser measuring devices 4 and 5, which serves as a displacement sensor, is installed with light emitters 4a and 5a diagonally arranged on the inner side of the flange 1b and corresponding light receivers

3

4b and 5b diagonally arranged on the inner side of the flange 1a. Axial displacement amount of the structure 1 is obtained from the average dimension between the faces of flanges 1a and 1b determined by the laser measuring devices 4 and 5.

The structure 1 is fixed to a member to be supported using fixing holes 1c and 1d formed at the flanges 1a and 1b. Dimensions of the structure 1 is corrected corresponding to the displacement amount of the structure 1 detected by laser measuring devices 4 and 5 as follows: the structure 1 is heated by the heater 3 for expansion if it has reduced dimensions; the structure 1 is cooled down for dimension reduction by cooling water supplied from a chiller (not shown) to the cooling water cannel 2 if it is expanded in dimensions. Thus, normal dimensions of the structure 1 are always maintained.

These heating and cooling operations are controlled by a controller (not shown) according to the values measured by laser measuring devices 4 and 5. Dimensional values controlled by this mechanism correspond to the thermal expansion coefficient proper to the material of the structure 1 and the temperature change given by heating or cooling. When any compressive or tensile stress is applied to the structure 1, thermal displacement amount shall be added to or subtracted from the strain caused in response to such stress to obtain controlled dimensional values.

In any case, the structure 1 is adjusted within the range of expansion and contraction caused by its elastic or thermal deformation. Utilization of such expansion and contraction of the structure 1 is not limited to the correction of displacement to maintain the normal dimensions. They may be also positively utilized for fine position adjustment of the supported member fixed to the flanges 1a and 1b.

Though the structure 1 is cooled down inside and heated at the outer surface in this embodiment, it may be heated inside and cooled down outside. Alternatively, the structure may be heated or cooled according to the temperature of water circulated in the internal cooling water channel 2. Further, a separate heater 3 may be constituted with heat pipes for adjustment of expansion and contraction amount, which can be obtained by outside adjustment of the temperature at the structure 1.

For both heating and cooling, it is necessary to prevent warp or deflection of the structure 1 itself by arranging the structure to have radial temperature gradient to be axially symmetric.

The displacement sensor may be mounted on the central axis. In this case, one displacement sensor is sufficient.

The liquid circulated in the cooling water channel 2 may be heating media other than cooling water such as oil or gas.

Further, a hydraulic cylinder may be incorporated in the structure 1 as the driving source for expansion and contraction of the structure 1. Such a hydraulic cylinder requires the oil temperature to be maintained at a fixed value, but it facilitates control of expansion and contraction amount and pressure loading with quick response.

The sensor to measure the displacement amount of the structure 1 may be any sensor capable of detecting elastic or thermal deformation of the structure 1. Specifically, a strain gauge, a differential transformer, a potentiometer or the like may be used. In either case, the displacement sensor must be able to exactly measure the generated displacement amount without being affected by temperature even if the measured subject and the sensor itself suffer temperature change. For example, a strain gauge made of super invar is capable of precise measurement without being affected by temperature at or below the temperature of about 60°C or less.

The structure 1 shown in Figs. 1 and 2 can also serve as an actuator for a hollow pipe-like structure, which will be described later.

Figs. 3 and 4 show another embodiment.

In the figures, a square pipe-shaped structure 6, which is a kind of hollow pipe-like structures, is provided with panel type cooling actuators 7C and 8C on internal faces of two opposing walls. These walls are also provided with similar panel type heating actuators 7H and 8H on external faces. The cooling actuator 7C and heating actuator 7H and the cooling actuator 8C and heating actuator 8H constitute pairs of actuators to form actuator devices 7 and 8 respectively.

Further, outside of the structure 6 is provided with axial displacement sensors S1 to S4 arranged on both sides for each of the heating actuators 7H and 8H. These displacement sensors S1 to S4 detect the axial displacement amount of the structure 6.

The structure 6 should have a structure to be supported on the upper or lower end, but Figs. 3 and 4 show only actuator devices 7 and 8 and the part with displacement sensors S1 to S4 only for convenience.

Specific structure of cooling actuators 7C and 8C (not shown in the figures) is such that a pipe for cooling water circulation is arranged inside. A chiller (not shown) supplies and circulates cooling water in the pipe so that the walls of the structure 6 in contact are cooled down and contracted. For heating actuators 7H and 8H, too, specific structure is not shown in the figures. Each of them consists of a face heater

4

comprising an electric heater, which heats and expands the wall of the structure 6 in contact when electric current is supplied. These actuator devices 7 and 8 can be formed quite thin, and they do not occupy a large space inside or outside of the structure 6.

In this embodiment, the displacement sensors S1 to S4 installed on right and left sides of the heating actuators 7H and 8H detect the axial displacement amount of the walls constituting the structure 6. In response to the average of the displacement amount calculated for each wall, the controller (not shown) controls actuator devices 7 or 8 for heating or cooling so as to expand or contract the applicable wall. It is recommended to use structure deformation detectors under application by the applicant (Application No. H1-234428) as the displacement sensors S1 to S4, since they can accurately measure small displacement due to temperature deformation or elastic deformation of this type.

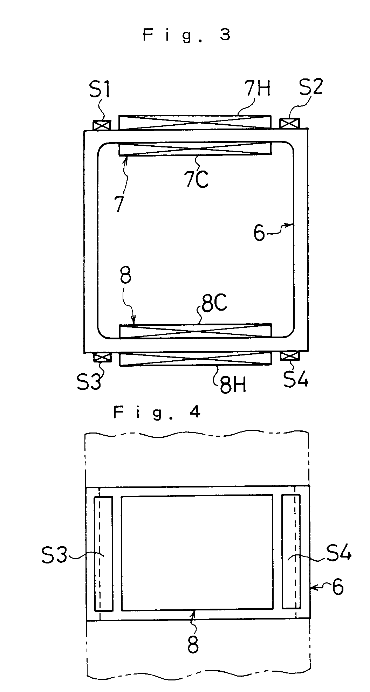

Figs. 5 to 8 are explanatory views showing operations of cooling actuators 7C and 8C and heating actuators 7H and 8H and change in dimensions and attitude of structure 6. In Fig. 5, the structure 6 is under constant atmospheric temperature and under uniform contraction or tensile load on upper and lower surfaces. The actuator devices 7 and 8 are not both in operation, the axial dimension of the structure 6 is h and the upper and lower surfaces are maintained in parallel.

Fig. 6 shows a case where the heating actuators 7H and 8H (marked black) on the both outer sides of the structure 6 operate and heat the walls uniformly. The axial direction dimension of the structure 6 expands by $\Delta h1$ and the upper and the lower surfaces are maintained in parallel.

Fig. 7 shows a case where the cooling actuators 7C and 8C (marked black) on the both inner sides of the structure 6 operate and cool the walls uniformly. The axial direction dimension of the structure 6 is contracted by $\Delta h_2$ and the upper and the lower surfaces are maintained in parallel. The displacement amounts $\Delta h_1$ and $\Delta h_2$ in Figs. 5 and 6 can be arbitrarily adjusted by setting the wall temperature for the structure 6 according to the heating or cooling capacity of the heating actuators 7H and 8H or cooling actuators 7C and 8C.

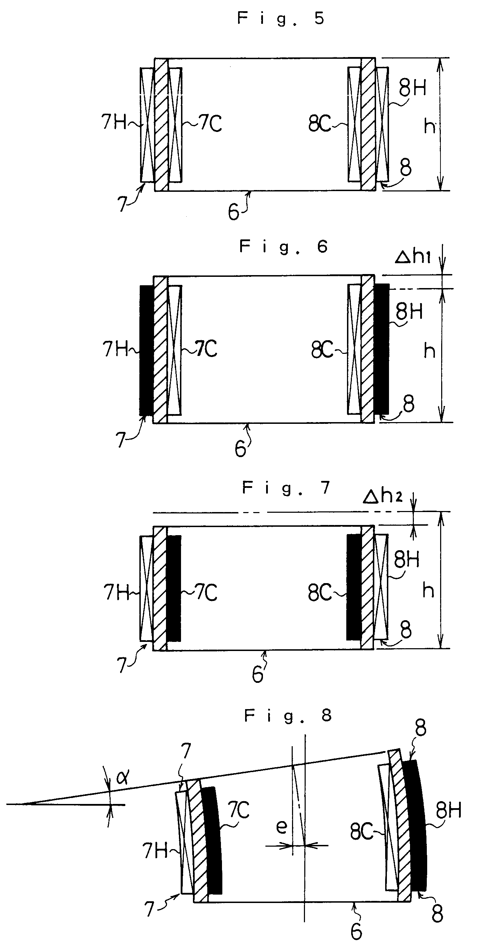

Fig. 8 shows a case where the cooling actuator 7C located on the left inner side of the structure (marked black) and the heating actuator 8H located on the right outer side of the structure operate. They cool down and contract the left wall and heat and expand the right wall. The upper face of the structure 6 is inclined counterclockwise by $\alpha$ degrees with the central point of the face moved to the left by distance e. In short, the structure 6 makes a tilt. The tilt angle $\alpha$ and the distance of central point movement e can be arbitrarily adjusted by changing the degree of heating and cooling by the actuator devices 7 and 8.

The tilt can be made in opposite direction when heating and cooling of walls by the actuators are performed on the opposite sides. Thus, this embodiment realizes two degrees of freedom: vertical expansion and contraction and right and left tilting. Accordingly, the structure to be supported connected to the structure 6 can be accurately controlled for vertical movement and tilting angle in the order of displacement amount obtained by thermal expansion.

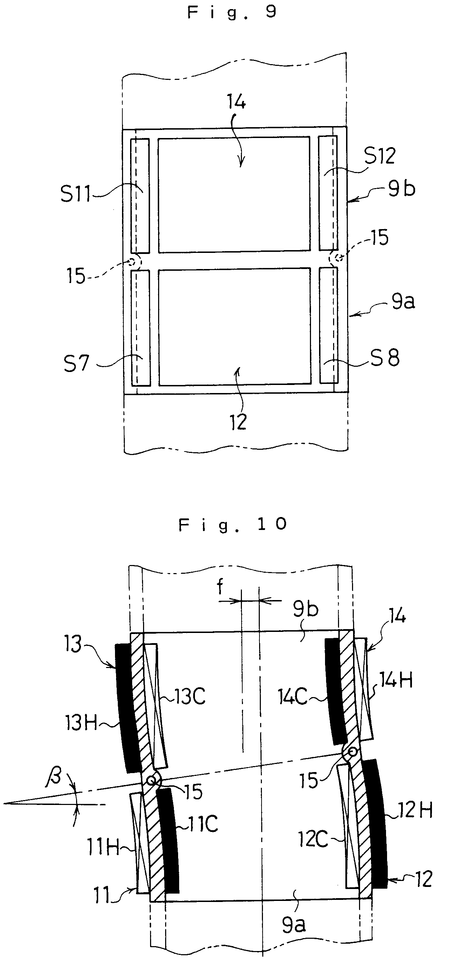

Figs. 9 to 11 show another embodiment.

This embodiment consists of two stacked structures 9a and 9b, each of which has the same configuration as the structure 6 in Figs. 3 to 8, with their faces having the actuators arranged to be on the same side. A cooling water channel 15 is formed at the joint part between the structures 9a ad 9b for thermal insulation so as to prevent the heat from being transmitted between the upper and lower structures 9a and 9b. Though omitted in the figure, similar cooling water channels are formed at the lower end of the structure 9a and the upper end of the structure 9b for thermal insulation from the structure to be supported. This method of thermal insulation for the structure to be supported can also apply to the embodiment shown in Figs. 1 and 2. No plan view is given for this embodiment for it will be almost the same as Fig. 3.

In Fig. 9, displacement sensors S7 ad S8 installed on the front side of the structure 9a detect the axial displacement of the wall. The structure 9a is also provided with other displacement sensors on the back side (not shown). Displacement sensors S11 and S12 are mounted on the front side of the structure 9b and detect the axial displacement of the wall. The structure 9b is also provided with other displacement sensors on the back side.

As shown in Fig 10, the structures 9a and 9b are provided with heating actuators 11H to 14H on the outer sides of opposing walls and cooling actuators 11C to 14C on the inner sides of those walls. These actuator devices 11 to 14 are controlled by a controller (not shown) and heat or cool the structures 9a and 9b in response to the displacement amount detected by the corresponding displacement sensors.

With this embodiment where the structures 9a and 9b are stacked, if they have the same configuration as the structure 6 in Figs. 3 and 4, the displacement amount, tilt angle and distance of central point movement accompanying the tilt are theoretically doubled. In addition, combinations of actions by actuator devices 11 to 14 increased from those with the embodiment of Figs. 3 and 4 enable more complicated control for high level attitude control.

5

For example, the lower structure 9a is tilted counterclockwise by an angle of $\beta$ and the upper structure 9b is tilted clockwise also by an angle of $\beta$ as shown in Fig. 10. The upper surface of the structure 9b is parallel to the lower surface of the structure 9a with the central axis of the structure 9b alone moved toward left by the distance f. This distance of movement f can be freely adjusted by changing the tilt angle $\beta$ of the structures 9a and 9b. Thus, horizontal movement without tilt, which cannot be realized by the embodiment shown in Figs. 3 and 4, is enabled with this embodiment.

If, on the contrary to the Fig. 10, the structure 9a is tilted clockwise and the upper structure 9b is tilted counterclockwise, the central axis can be moved toward right.

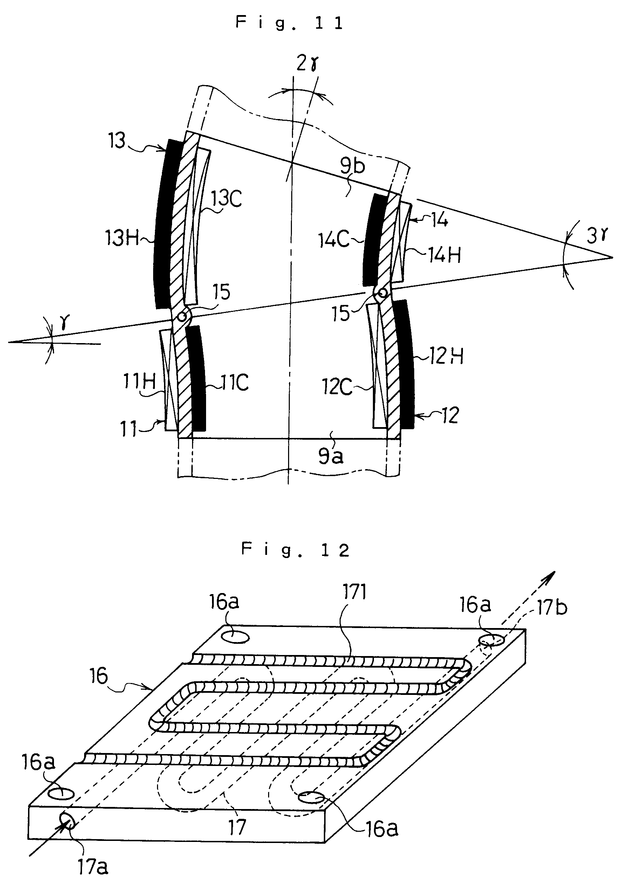

Fig. 11 shows another example when the lower structure 9a is tilted counterclockwise by an angle of $\gamma$ and the upper structure 9b is tilted clockwise three times the tilt angle for the lower structure (by an angle of about $3\gamma$). In this case, the upper surface of the structure 9b makes a tilt clockwise by an angle of $2\gamma$ in relation to the central axis of the structure 9a. Here, the central axis of the structure 9b is aligned to the central axis of the lower structure 9a.

In other words, by setting the tilt of the upper structure 9b three times the tilt of the lower structure 9a and facing them toward opposite directions, tilt can be obtained without moving the center of the structure axis. As a result, this embodiment gives three degrees of freedom: vertical expansion and contraction, oscillation by tilt and horizontal movement. This increases variation of attitude control for the structure to be supported which is connected to the structures 9a and 9b.

Fig. 12 shows another embodiment of an actuator. This actuator 16 serving for both heating and cooling is provided with a cooling liquid channel 17 formed inside of the panel-shaped body. Cooling liquid coming in through the inlet 17a of the channel 17 passes almost the entire area of the actuator 16 and then drained from the outlet 17b. The actuator 16 is also provided with a groove 171 for heater mounting on the upper surface. A sheath heater (not shown) as a heating source will be mounted therein.

The actuator 16 with the sheath heater mounted is installed and fixed to the structure surface closely using the fixing holes 16a formed on the four corners. Thus, a structure can be heated or cooled by one actuator 16 mounted on one side of its wall. This makes mounting and control of the actuator 16 becomes easier.

Still another embodiment is now described. Actuator devices and displacement sensors are mounted on opposing two walls in the embodiment shown in Figs. 3 to 5, but they can be added to the remaining two walls. By controlling the expansion and contraction of each pairs of opposing walls out of the four walls constituting a pipe-like structure with a square-shaped cross section, tilt direction can be increased by one from the embodiment in Figs. 3 and 4, which realizes three degrees of freedom.

A concrete configuration of this embodiment can be obtained by mounting actuator devices and displacement sensors on the right and left sides where actuator devices and displacement sensors are not mounted in Fig. 3. The action will be almost the same as that shown in Figs. 5 to 8, except that one more plane of tilt is added to the upper surface in Fig. 8. This enables tilting of the structure in any direction by combining the tilt in these two directions.

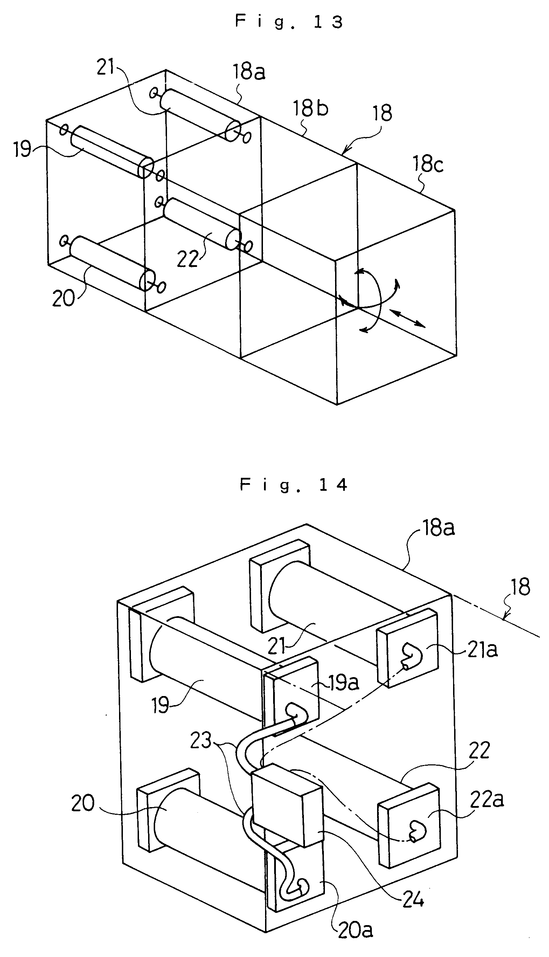

Next, referring to Figs. 13 and 14, a specific embodiment of this idea is described below. In Fig. 13, a hollow rectangular parallelepiped of beam structure 18 is divided into three compartments 18a to 18c and inside of the compartment 18a, cylinder type actuators 19 to 22 in longitudinal direction of the structure 18 are fixed on the four corners and defined by the compartment walls. These actuators 19 to 22 are usually grouped by two corresponding to the direction of control and uniformly drive expansion or contraction of the side walls. As a result, as shown by an arrow at the compartment 18c, the structure 18 can be controlled for three degrees of freedom: longitudinal expansion and contraction and vertical and horizontal tilts.

Displacement sensors (not shown) are mounted on the outer walls of the compartment 18a or actuators 19 to 22 and the amount of expansion and contraction caused by the actuators 19 to 22 are adjusted and controlled in response to the displacement amount detected by these displacement sensors. Fig. 14 shows the inside of the compartment 18a in detail. Cylinder-type actuators 19 to 22 may be hydraulic cylinders, or thermal actuators, the latter being capable of expanding or contracting the incorporated expansion unit by heating or cooling.

This figure shows an embodiment with thermal actuators. A flexible heat pipe 23 is inserted into the inside of the actuators through the head covers 19a to 22a of the actuators 19 to 22. The heat pipe 23 has its end inserted into a heat exchanger 24 for heat exchange by cooling water in the heat exchanger 24. The heat exchanger 24 cools down the actuators 19 to 22 with causing temperature change so that the actuators 19 to 22 can generate the driving force for expansion and contraction.

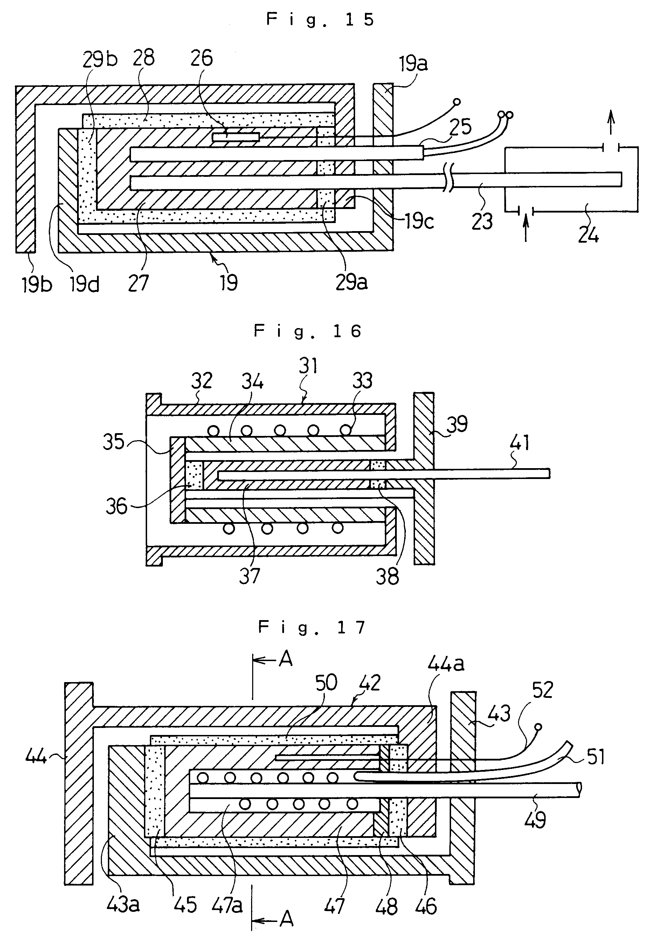

Fig. 15 is a cross sectional view to show internal structure of the actuator 19. A member having angulated U-shaped cross section formed as extension of the head cover 19a and another member having a cross section of the same shape formed as extension of the end cover 19b on the other side are engaged.

These members hold an expansion unit as an expansion and contraction member 27 between the ends 19c and 19d opposite to the end and head covers via incompressible heat insulators 29a and 29b. The expansion and contraction member 27 is coated with a heat insulator 28 on the outer circumference for heat insulation from the outer atmosphere. A heat pipe 23, a sheath heater 25 and a thermocouple 26 are embedded inside the expansion and contraction member 27. The other end of the heat pipe 23 is inserted into the heat exchanger 24 for heat exchange by cooling water, so that it cools down the expansion and contraction member 27 by absorbing heat from the expansion and contraction member 27.

In case of this actuator 19, the heat pipe 23 always absorbs the heat from the expansion and contraction member 27 to maintain the temperature at the expansion and contraction member 27 below a certain temperature. Only when heating is required, the sheath heater 25 is turned on and heats the expansion and contraction member 27 up to the specified temperature with monitoring the thermocouple 26 for adjustment of the expansion and contraction amount. Specifically, this embodiment makes use of a phenomenon that the interval between the head cover 19a and the end cover 19b increases when the expansion and contraction member 27 is cooled down and decreases when the expansion and contraction member 27 is heated. The actuator 19 is usually fixed under tension to the supported structure. To control attitude by decreasing the interval for the supported structure, the expansion and contraction member 27 is heated up to the temperature at which necessary contraction is obtained.

Alternatively, the sheath heater 25 may be always heated and control of the temperature at the expansion and contraction member 27 is performed by adjusting the water temperature in the heat exchanger 24. In any case, the temperature of the expansion and contraction member 27 is adjusted corresponding to the relative difference between the heating amount at the sheath heater 25 and the cooling amount at the heat pipe 23.

When the actuator 19 is mounted, some tensile load is usually applied to between the head cover 19a and the end cover 19b to cause compressive stress at the expansion and contraction member 27 resulting in strain. In order to correct this strain, thermal stress is generated at the expansion and contraction member 27 by controlling the temperature of the expansion and contraction member 27. The strain is adjusted through balancing this stress and other stress applied from outside, so that the dimension between the head cover 19a and the end cover 19b finally becomes the desired value.

Fig. 16 shows another embodiment of a cylinder-type thermal actuator. This actuator 31 is provided with an end cover 32 having a hat-shaped cross section with a hole formed at the bottom. An expansion and contraction member 34 wound by a sheath heater 33 on the outer surface is inserted into this hole with keeping its center coincided with the central axis of the end cover. On the other end of the expansion and contraction member 34, a lid 35 is integrally fixed.

An expansion and contraction member 37 is connected to the inner side of the lid 35 via incompressible insulator 36 in the central axis direction. On the other end of the expansion and contraction member 37, a disc-shaped head cover 39 is connected also via incompressible insulator 38. A heat pipe 41 is inserted through the head cover 39 and the insulator 38 and reaching a point near the left end of the expansion and contraction member 37.

In this actuator 31, the distance between the faces of the end cover 32 and the head cover 39 decreases when the expansion and contraction member 34 is expanded due to heating with a sheath heater 33 and when the expansion and contraction member 34 is contracted due to cooling of the expansion and contraction member 37 with the heat pipe 41. The amount of expansion or contraction of the actuator 31 can be adjusted by controlling heating at the sheath heater 33 and the cooling with the heat pipe 41. Thus, the actuator 31 acts almost in the same way as the aforementioned actuator 19.

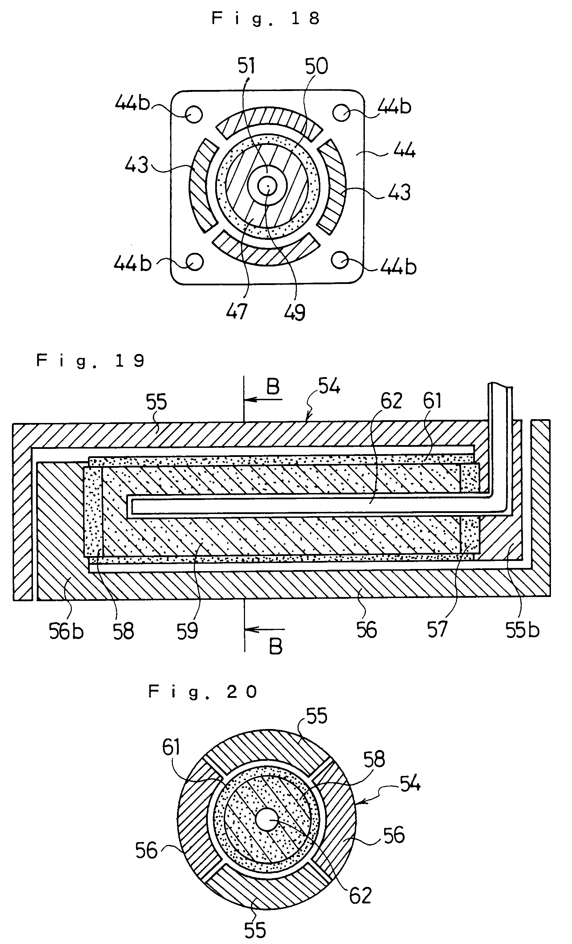

Figs. 17 and 18 show still another embodiment of a cylinder-type thermal actuator. As shown in Figs. 17 and 18, an actuator 42 is provided with a head cover 43 and an end cover 44 combined together, and a pipe-shaped expansion and contraction member 47 and a disc 48 are pressed or adhered to the opposite ends 43a and 44a via incompressible insulators 45 and 46.

The expansion and contraction member 47 has a hollow part 47a where a cooling heat pipe 49 and heating sheath heater 51 are inserted through the head cover 43, the opposite end of the end cover 44a, the insulator 46 and the disc 48. The sheath heater 51 is spirally displaced on the outer circumference of the heat pipe 49 in the hollow part 47a. The main part of the thermocouple 52 is inserted to the expansion and contraction member 47 and the outer circumference of the expansion and contraction member 47 is coated with an insulator 50. The end cover 44 shown in Fig. 18 has fixing holes 44b on the four corners, and the head cover 43 is also provided with similar fixing holes so that they can be used for mounting of the actuator 42.

As in the cases of aforementioned actuators 19 and 31, this actuator 42 is usually fixed to the supported structure under tension, i.e. with the expansion and contraction member 47 placed under pressure. The distance between the faces of the head cover 43 and the end cover 44 can be adjusted to a desired value by controlling the temperature using the cooling heat pipe 49 and the heating sheath heater 51.

Figs. 19 and 20 show another embodiment of a cylinder type thermal actuator.

As shown in the figure, an actuator 54 is provided with end covers 55 and 56 combined together, both of which are partially lacking cylinders having an angulated U-shaped cross section. A bar-shaped expansion and contraction member 59 is pressed or adhered between the ends 55b and 56b via incompressible insulators 57 and 58. The expansion and contraction member 59 is coated with an insulator 61 on the outer circumference and has a heat pipe 62 for temperature adjustment inserted to its center part through the other end of the end cover 55b and the insulator 57.

As in the cases of actuators 19, 31 and 42 above, this actuator 54 is also fixed under tension to the supported structure, i.e. with the expansion and contraction member 59 placed under pressure. With the heat pipe for temperature adjustment 62 connected to other heating or cooling source (not shown), the temperature can be adjusted as required and the dimension between the faces of the end covers 55 and 56 can be controlled to a desired value.

The actuator 42 in Fig. 17 and the actuator 54 in Fig. 19 are formed as one piece including the head cover 43 and end cover 44 or end covers 55 and 56 when assembling the actuators 42 and 54. In actual manufacturing, either of the head cover 43 or end cover 44 or either of the end covers 55 and 56 may be divided and welded or otherwise made into one piece after assembly of each.

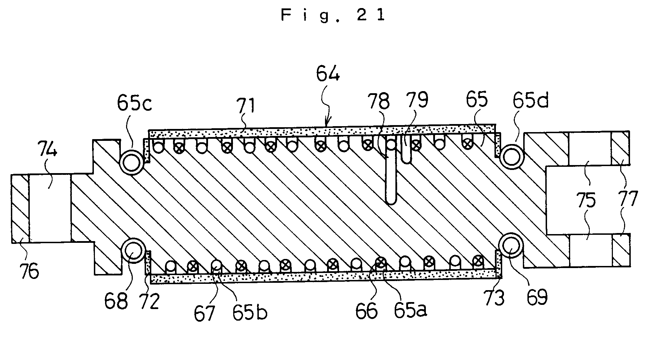

Fig. 21 again shows another embodiment of a cylinder type thermal actuator. This actuator 64 enables both compression and pull. A bar-shaped expansion and contraction unit 65 made of stainless steel (SUS304) or other similar material is provided with two spiral grooves near the center of its outer circumference. One of the grooves 65a is wound with a sheath heater 66 for heating and the other groove 65b is wound with a cooling water pipe 67. Both grooves are filled and coated with heat transfer cement inside for efficient heat transmission.

The actuator 64 is also provided with deeper grooves 65c and 65d outward of the starting and terminating points of the spiral grooves 65a and 65b. Cooling water pipes 68 and 69 belonging to a system separate from the cooling water pipe 67 are wound in these grooves so as to prevent the heat from being exchanged between the central part and either end of the expansion and contraction unit 65. Similarly, the expansion and contraction unit 65 is coated with an insulator 71 on the outer circumference for heat insulation and the inner sides of the grooves 65c and 65d are also coated with insulators 72 and 73 to prevent the heat being discharged to and absorbed from the outer atmosphere by the central part of the expansion and contraction unit 65.

A single-projection clevis 76 and a double-projection clevis 77 having pin fixing holes 74 and 75 on their ends are formed on the ends of the expansion and contraction unit 65. In addition, the expansion and contraction unit 65 is provided with a thermocouple 78 to measure the temperature of the central part and another thermocouple 79 to measure the temperature near the surface for detecting temperature of the expansion and contraction unit 65.

This actuator 64 expands or contracts according to the displacement information of the supported structure to which it is connected. To expand the supported structure, the sheath heater 66 is turned on to heat the expansion and contraction unit 65 until the unit obtains a required length through thermal expansion. To contract the supported structure, the sheath heater 66 is turned off and cooling water is circulated through cooling water pipe 67 to cool down the expansion and contraction unit 65 until it is thermally contracted to a desired length. Such heating and cooling are performed with monitoring the temperature at the expansion and contraction unit 65 detected by the thermocouples 78 and 79. By adjusting the electric current supplied to the sheath heater 66 or the temperature of the cooling water or by frequently suspending the supply, the expansion/contraction amount of the actuator 64 may be more precisely and stably adjusted.

Thermal actuators 19, 31, 42, 54 and 64 described above can be cooled down by atmosphere without requiring an exclusive cooling device if the zero-point for operation is preset to a high temperature suitable to the application of the mounted structure. They just require a heat source only.

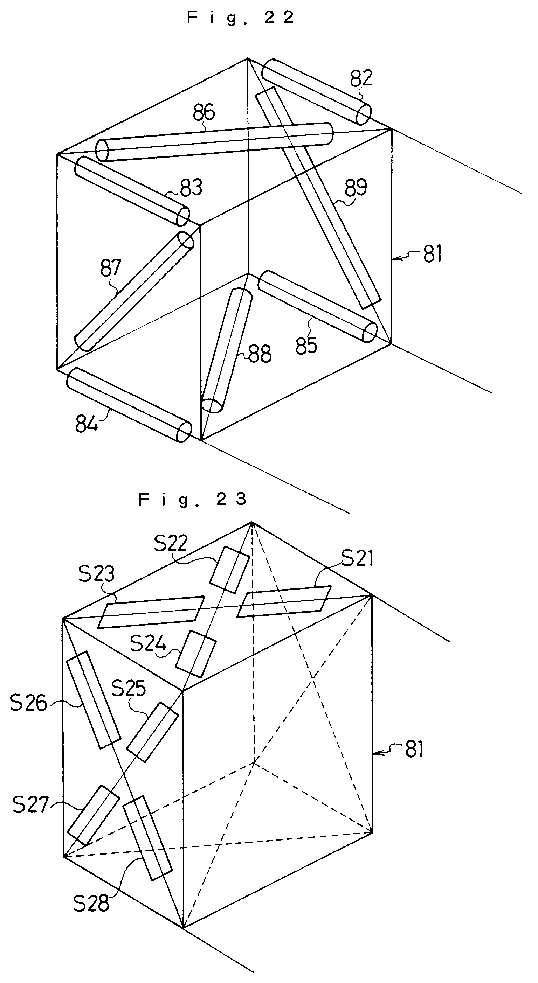

Fig. 22 shows an embodiment obtained by modification of the one shown in Fig. 13. A structure 81, which is a hollow rectangular parallelepiped, has a compartment provided with actuators 82 to 85 in the longitudinal direction of the structure 81 fixed on the four corners as in Fig. 13, and also with actuators 86 to 89 on diagonal lines of faces. A hydraulic cylinder or the actuator 64 shown in Fig. 21 is suitable to be used as actuators 82 to 89.

This embodiment enables, in addition to expansion and contraction control of the actuators 82 to 85 in longitudinal directions on the four corners, generation of torsion in axial direction at the structure 81 by adjusting the expansion and contraction of the actuators 86 to 89 diagonally mounted on faces. This embodiment realizes one more degree of freedom than the embodiment of Fig. 13, i.e. four degrees of freedom.

Fig. 23 shows the arrangement of displacement sensors S21 to S28 mounted on the actuator mounting faces of the structure 81 of Fig. 22. Two of the displacement sensors S21 to S28 are arranged on each diagonal line of faces. Through processing of the values detected in axial direction by these sensors, expansion and contraction displacement and torsion are detected for each face.

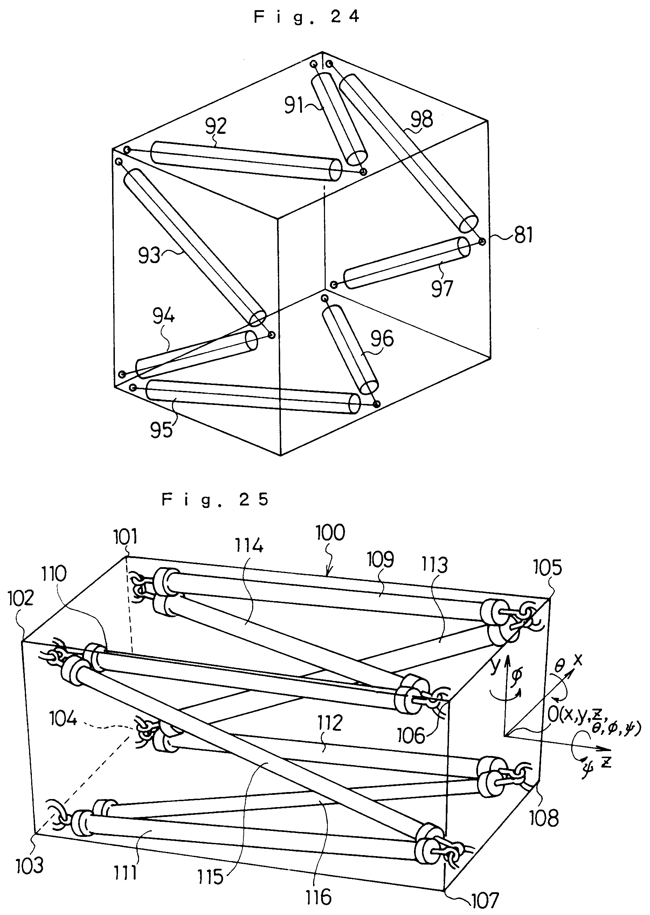

Fig. 24 shows an embodiment with less actuators than the embodiment shown in Fig. 22. A pair of two actuators 91 and 92, 93 and 94, 95 and 96 or 97 and 98 is mounted on each face between a corner and the center of the opposing edge. This embodiment also provides expansion and contraction, tilt and torsion of the structure 81 in axial direction by appropriately combining the expansion/contraction of the actuators on four faces.

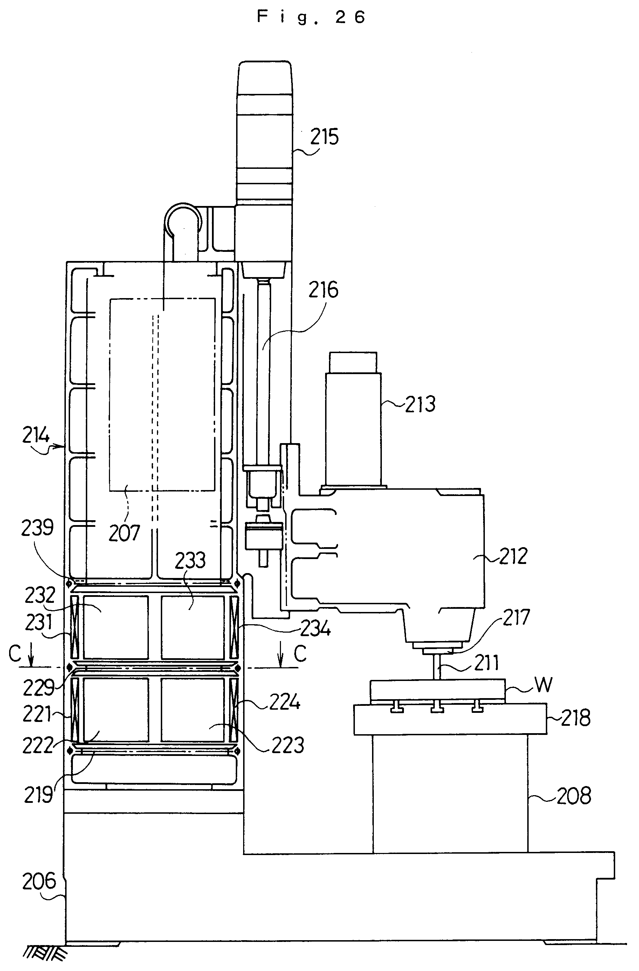

Fig. 25 shows a box-type structure with beams having actuators almost in the same way as the embodiment shown in Fig. 22.

As shown in the Figure, a box-type beam structure 100 is a hexahedron and has eight actuators 109 to 116 connected to the corners 101 to 108. By controlling the expansion and contraction of the actuators, expansion and contraction, tilt and torsion can be generated for the box-type beam structure 100.

For control of this box-type beam structure 100, for example, change in position of the central point O $(x, y, z)$ on the face defined by corners 105 to 108 in relation to the face defined by corners 101 to 104 and slight change in angle around the axes x, y and z $(\theta, \phi, \psi)$ are controlled as functions of expansion of the actuators 109 to 116 (a, b, c, d, e, f, g and h).

The structures 9a and 9b shown in Fig. 9 control the attitude of the structures 9a and 9b for three degrees of freedom with actuators disposed on two opposing faces only of each structure. This embodiment of Fig. 9, however, may be modified for control with five degrees of freedom by installing actuators on four faces for each structure to form a stacked eight-face configuration and mounting displacement sensors on each face.

Similarly, in Figs. 13 and 14, installation of longitudinal actuators on four corners is limited to the compartment 18a of the structure 18 and the attitude of the structure 18 is controlled with three degrees of freedom. The embodiment of Figs. 13 and 14, however, may be modified for control of the structure 18 with five degrees of freedom by installing actuators longitudinally on four corners in the compartment 18b adjacent to the compartment 18a.

The embodiment shown in Figs. 3 and 4 provides two-face control for the structure 6 and embodiments shown in Figs. 13 and 14 and 22 and 24 provide four-face control for the structure 18. In addition to these embodiments, the structure may be formed as a hollow polygonal prism such as triangular prism or pentagonal prism or a cylinder and actuators and displacement sensors may be disposed on all or some arbitrary faces of the structure, thereby enabling attitude control of a hollow polygonal prism with three, five or more faces or a cylinder. This realizes precise attitude control for a structure.

The embodiments shown in Figs. 13 and 22 are both provided with actuators and displacement sensors on faces located around the axis of the structure. Though not shown, actuators and displacement sensors may be mounted on faces perpendicular to the axis. In addition, the structure is not limited to a hollow cylindrical structure. Actuators and displacement sensors may be mounted on faces of various polyhedrons for attitude control of a structure formed as a polyhedron.

Thus, a structure attitude control device according to the present invention not only corrects slight dimensional change caused by temperature change of the structure itself by adjusting the temperature through heating or cooling of the structure itself, but also performs extremely accurate attitude control in the order of some micron m, which has been conventionally impossible. Further, similar correction of dimensional change and extremely accurate attitude control can be provided without heating or cooling the structure by means of forcible elastic change of the structure using a separate actuator, which develops application of extremely accurate attitude control in various fields such as industrial machines and instruments.

Cooling water circulated in actuators or structure in embodiments can be replaced by oil, gas or other thermal media adjusted to a fixed temperature.

The controller included in some embodiments is not specifically shown in the figure, but it usually consists of electric circuits and serves for temperature adjustment of the thermal actuators and expansion and contraction amount control of the hydraulic cylinder. If the controller is used for maintaining the originally determined attitude of the structure, upon detection of any displacement by displacement sensors, it outputs actuator driving signals for correction of that displacement based on detected values. If the controller is used for precise control to bring the structure to an attitude specified by input, it outputs actuator driving signals with monitoring values detected by displacement sensors.

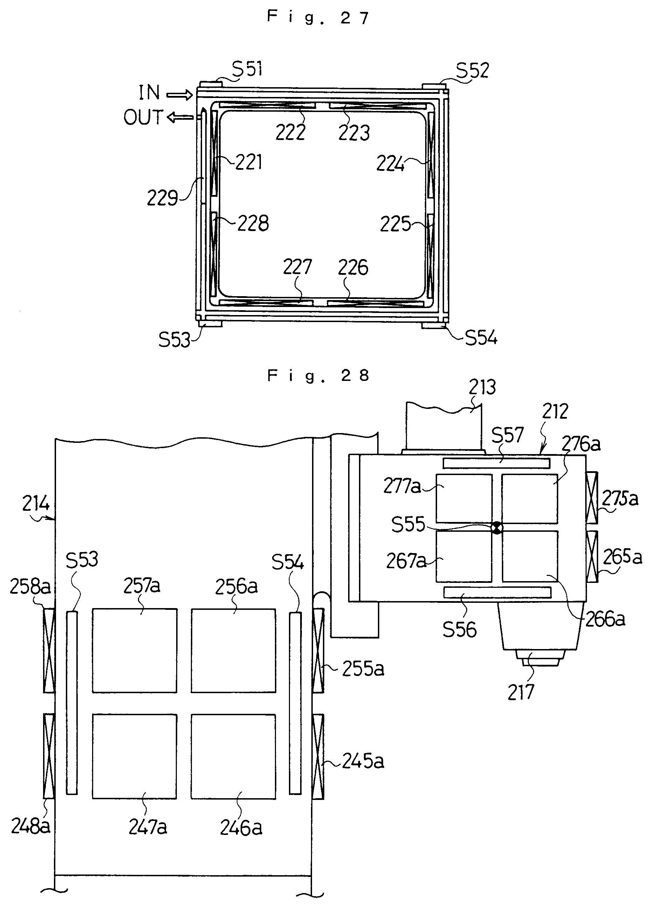

Next referring to Figs. 26 and 27, an embodiment where an attitude control device for machine tools according to the present invention is applied to a machining center is described.

In Figs. 26 and 27, a hollow column 214 is fixed onto a base 206 and a balance weight 207 for a head 212 is suspended inside of the column 214. The head 212 is slidablly supported for vertical movement by a guide formed on the front side of the column 214 and controlled for vertical position by a servo motor 215 mounted at the top of the column 214 and a ball screw 216.

The head 212 is provided with a tool holder 217 at an end of the bottom so that a tool 211 suitable for work can be detachably grasped. The tool 211 is driven by a motor 213 mounted at the top of the head 212 via a deceleration mechanism (not shown).

A workpiece W is fixed onto a table 218. A driving mechanism 208 moves the table 218 in X and Y directions so that the tool 211 can process the workpiece W. The column 214 is formed as a hollow pillar provided with ribs at fixed intervals on inner circumference. Among the compartments divided by these ribs, two compartments nearest to the base 206 are respectively provided with eight thermal actuators on inner circumference. Fig. 27 shows thermal actuators 221 to 228 for the lower compartment. Out of the thermal actuators in the upper compartment, four thermal actuators 231 to 234 only are shown in Fig. 26. These thermal actuators consist of thermal semiconductor devices capable of electronic cooling and heating and can heat or cool the face in contact with the wall by changing the direction of electric current.

As shown in Fig. 26, channels 219, 229 and 239 are formed on the inner circumference of the column 214 at the boundary between the upper and lower compartments provided with thermal actuators and at the rib positions immediately above and below these compartments. Oil at a predetermined temperature circulates in these channels 219, 229 and 239 for thermal insulation between the compartments. The column 214 is provided with temperature compensated displacement sensors S51 to S54 at the ends of side faces, which are the upper and lower edges in Fig. 27. These displacement sensors consist of strain gauge or the like and detect the displacement amount caused by expansion or contraction of the column 214. The detected displacement amount is input to a controller (not shown) for separately controlling the direction of the electric current fed to 16 thermal actuators disposed in upper and lower compartments according to the displacement amount.

Displacement sensors may be mounted on the head 212 so that the displacement amount detected by these sensors can be added to the above control of thermal actuators. Thus, when walls of the column 214 where thermal actuators are mounted are heated or cooled, expansion and contraction amount is adjusted according to the temperature and the elastic deformation synthesized from heating at a motor 213 and reaction force at the tool 211 corrects positional displacement caused at the tool 211. As a result, the tool 211 can be precisely maintained at the original position, which enables processing at a higher accuracy than before.

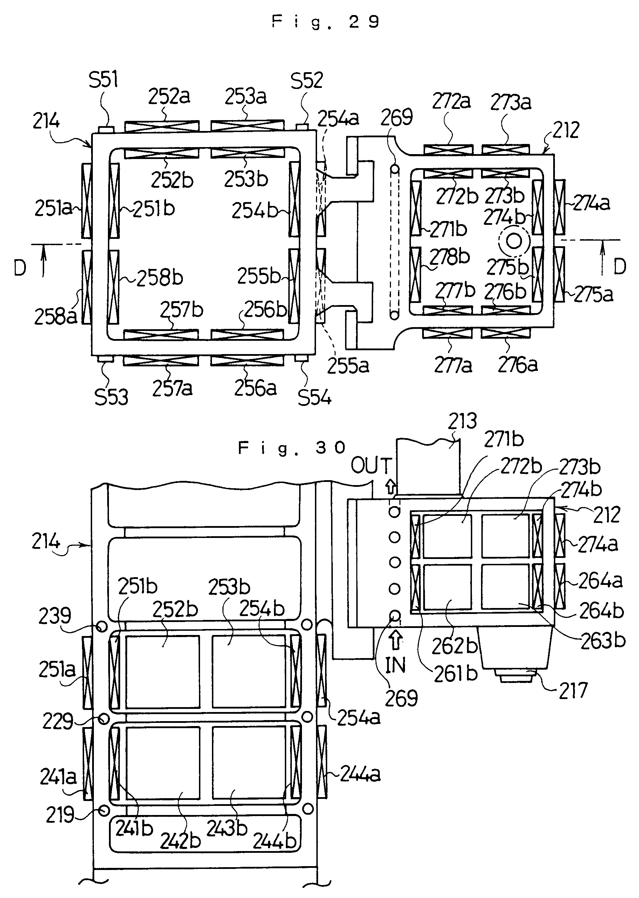

Figs. 28 to 30 show another embodiment.

This embodiment is different from the one in Fig. 26 in that the head 212 is also provided with thermal actuators and heat insulator and that the thermal actuators mounted on the column 214 and the head 212 are formed as combination of electric heater and oil jacket. Specifically, the column 214 is provided with ribs at fixed intervals as in Fig. 24, and eight thermal actuators for cooling are mounted on the outer circumference of the compartment nearest to the lower base 206. In addition, eight thermal actuators for cooling are mounted to a compartment at a higher level of the column 214. For the sake of convenience, Fig. 28 shows eight thermal actuators for cooling 245a to 248a and 255a to 258a only. The 16 thermal actuators consist of oil jackets. Low temperature oil supplied from a separate oil cooler (not shown) circulates in the oil jackets and lowers the temperature at the 16 thermal actuators and thereby cools down the wall of the column 214 in contact with them.

The column 214 is also provided with 16 thermal actuators for heating on the inner circumference of the upper and lower compartments corresponding to the 16 thermal actuators for cooling above. Fig. 29 shows thermal actuators 251b to 258b for the upper compartment only. The 16 thermal actuators for heating consist of face type electric heaters. When electric current is supplied to these electric heaters, the 16 thermal actuators generate heat and raise their temperature, thereby heating the walls of the column 214 in contact with them.

The operation of the 32 thermal actuators for heating or cooling making 16 pairs is such that either of the actuators on the inner or outer face heats or cools the block where the actuator pair is mounted. The column 214 is also provided with displacement sensors S51 to S54 at the ends of the both sides as shown in Fig. 29. These displacement sensors S51 to S54 detect the displacement amount of the column 214 in axial direction.

The head 212 consists of a hollow frame provided with six thermal actuators for cooling on the outer circumference of both upper and lower compartments (12 actuators in total). For the sake of convenience, Fig. 29 shows six thermal actuators at the upper compartment 272a to 277a only. The frame is also provided with eight thermal actuators for heating on the inner circumference of the four faces for both upper and lower compartments (16 actuators in total). Fig. 29 shows eight thermal actuators 271b to 278b at the upper compartment only. In addition, for thermal insulation between the head 212 and the column 214, a channel 269 for cooling oil circulation is horizontally formed at fixed intervals at a location near the column 214 in the frame member.

These 12 thermal actuators for cooling also consist of oil jackets like those for the column 214, and 16 thermal actuators for heating comprise face-type electric heaters. When oil at a low temperature or the electric current is supplied to these actuators, the blocks of the head 212 in contact with the actuators are cooled or heated.

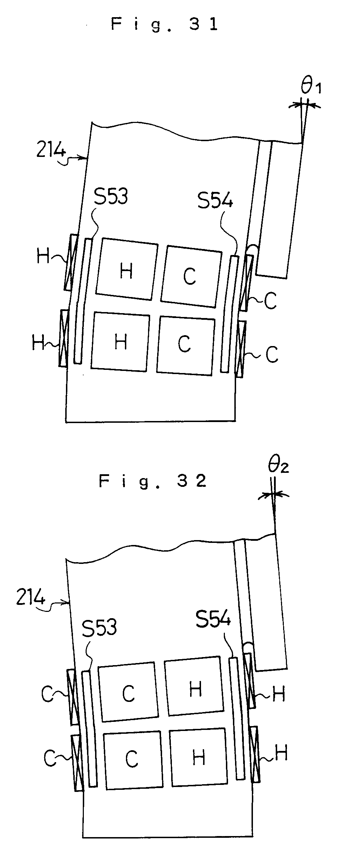

In Fig. 28, numerals 265a to 267a indicate thermal actuators for cooling, and in Fig. 30, numerals 241a and 244a are thermal actuators for cooling, 241b to 244b are thermal actuators for heating, 264a is a thermal actuator for cooling, and 261b to 264b are thermal actuators for heating.

Further, as shown in Fig. 28, temperature compensated displacement sensors S55 to S57 comprising strain gauge or the like arranged in horizontal direction are mounted at the center and the upper and lower ends of the area where thermal actuators 266a, 267a, 276a and 277a are mounted on sides of the head 212. In addition, three displacement sensors are mounted at the same positions on the rear side (not shown) so as to detect the displacement amount generated at the head 212.

The displacement amount detected by these six displacement sensors are input to a controller (not shown) for control of heating or cooling by thermal actuators according to the displacement amount. With heating or cooing the faces of the head 212 block by block, displacement generated at the tip of the tool 211 can be corrected through appropriate adjustment of the expansion and contraction amount of each face. This enables processing with maintaining the original position of the tool 211.

Figs. 31 to 34 give typical examples of control modes combining operations of the thermal actuators of the column 214 in the embodiment shown in Fig. 26 or 27 above. In these figures, actuators marked with "C" are cooling and those marked with "H" are heating.

In Fig. 31, the right side of the head is cooled (indicated by "C") and the left side is heated (indicated by "H") for both upper and lower compartments. This makes the column 214 tilt for an angle $\theta_1$ to the right.

In Fig. 32, the right side of the head is heated and the left side is cooled for both upper and lower compartments. This makes the column 214 tilt for an angle $\theta_2$ to the left.

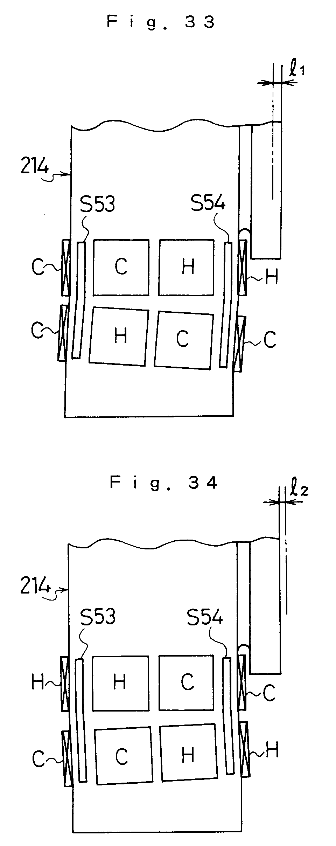

In Fig. 33, the right side is heated and the left side is cooled for the upper compartment and the right side is cooled and the left side is heated for the lower compartment. This almost straightly moves the column 214 to the right for a distance of $\ell_1$.

In Fig. 34, the right side is cooled and the left side is heated for the upper compartment and the right side is heated and the left side is cooled for the lower compartment. This almost straightly moves the column 214 to the left for a distance of $\ell_2$.

For controls described in Figs. 31 to 34 above, corresponding thermal actuators on the front and back sides of the views perform the same operation (heating or cooling). In addition to these combinations, various combinations of heating and cooling by thermal actuators are possible, since the column 214 is provided with 16 thermal actuators. Thus, corresponding to the values detected by displacement sensors S51 to S54 (See Fig. 27) and the values detected by the displacement sensors S55 to S57 (See Fig. 28) and three displacement sensors on the rear side of the head 212, fine control can be realized.

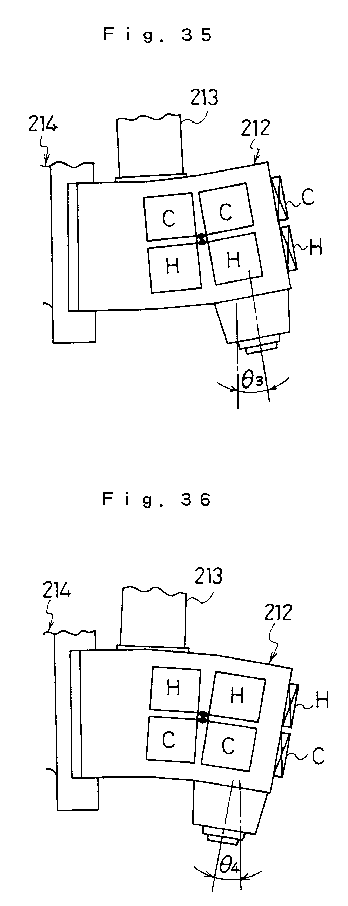

Figs. 35 to 38 show typical examples of control modes combining operations of the thermal actuators at the head 212 in Figs. 28 to 30.

In Fig. 35, both thermal actuators at the upper compartment of the head 212 are cooled and both actuators at the lower compartment are heated. This causes the head 212 to make a tilt of $\theta_3$ counterclockwise.

In Fig. 36, the thermal actuators on the upper compartment are both heated and those on the lower compartment are both cooled. This makes the head 212 tilt clockwise for an angle of $\theta_4$.

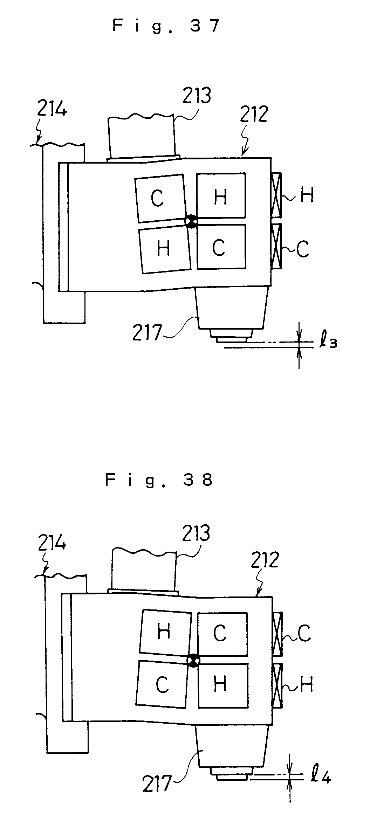

In Fig. 37, the upper left actuator and the lower right actuator are cooled and the upper right and the lower left actuators are heated. This causes the lower end of the tool holder 217 to almost straightly move upward for a distance of $\ell_3$.

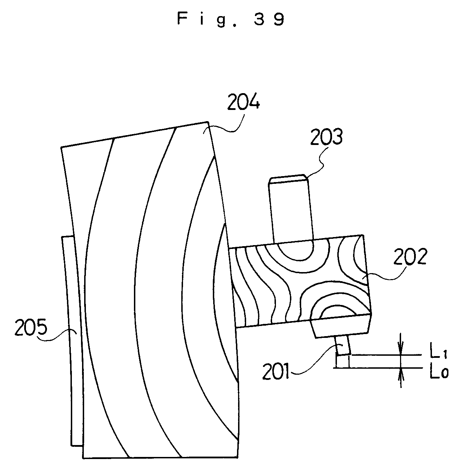

In Fig. 38, the upper left and the lower right actuators are heated and the upper right and the lower left actuators are cooled. This causes the lower end of the tool holder 217 to almost straightly move downward for a distance of $\ell_4$.

For controls described in Figs. 35 to 38 above, corresponding thermal actuators on the front and back sides of the views perform the same operation (heating or cooling). In addition to these combinations, various combinations of heating and cooling by thermal actuators are possible, since the head 212 is provided with 16 thermal actuators. Thus, corresponding to the values detected by displacement sensors S55 to S57 (See Fig. 28) and three displacement sensors on the rear side of the head 212, fine control can be realized.

With this machining center, thermal deformation at the head 212 due to heat generation at the driving motor 213 and its decelerating mechanism and irregular elastic deformation due to reaction force generated at the tool 211 during processing of workpiece W can be also detected by above displacement sensors. It is also possible to control heating and cooling by thermal actuators according to the displacement amount detected by displacement sensors and workpieces W with correcting and controlling displacement at the same time.

In addition, the head 212 has a channel 269 for circulation of cooling oil on the side closer to the column 214 so that cooling oil at a temperature slightly lower than the atmospheric temperature can be always supplied. This reduces heat transmission from the head 212 to the column 214, and thereby prevents thermal expansion and warp at the column 214.

When the displacement cannot be corrected by control of the head 212 alone or when displacement covers the whole head 212, or when displacement of the column 214 itself is displaced, the column 214 itself also serves for control to correct displacement according to values detected by displacement sensors. Combination of displacement controls by the head 212 and the column 214 for tool position, control will realize processing at a higher accuracy.

According to experiments by the inventor using the machining center shown in Fig. 26, when the ambient temperature is 35 degrees, heating temperature of heat actuators is 45 degrees and cooling temperature is 25 degrees; the operations of heat actuators can be controlled so that the tip position of the tool 211 can be controlled in the order of about 30 um.

Though thermal actuators just serve for either heating or cooling in the above embodiments, thermal actuators can be positioned so that they are left under intermediate condition without heating or cooling. Thermal actuator temperature can be not only set for two points (high temperature for heater and low temperature for cooling mechanism), but also set for continuous intermediate temperatures so that control can be made more precisely.

In the above embodiments, description focused on control to correct the displacement due to thermal deformation caused by heat mainly at the motor 213 and elastic deformation caused by reaction force with using thermal actuators. In addition to this, by positively controlling the operation of thermal actuators during processing as mentioned above, tool position can be controlled more precisely. For example, this attitude control device can realize extremely precise processing with accuracy in the order of microns for processing of die using a machining center. This was impossible with conventional techniques.

The column 214 and the head 212 are respectively provided with four thermal actuators on their faces (each of two compartments has a pair of actuators), but each compartment may have one actuator only. Further, any number of thermal actuators may be arbitrarily mounted for control on any number of compartments depending on the positions of faces for mounting.

Besides, temperature sensors may be arranged to the parts of the main structural frame constituting the machine tool in order to control thermal actuators with adding the heat displacement based on the detected temperature distribution of the whole tool. Such a machine tool has a higher accuracy than the one with separate attitude control for each thermal actuator and corresponding sensor.

This invention, which controls the attitude of a structure by generating heat displacement with thermal actuators installed on the walls of a hollow structure, can be also applicable to structures of various machine tools other than machining centers, improving the work accuracy of such machine tools.

Industrial Applicability

As described above, an attitude control device for a structure according to the present invention is an extremely accurate attitude control device useful not only in correcting the position of a structure constituting various industrial machines or instruments to their original positions, but also in positively moving the position of a structure.

An attitude control device for machine tools according to the present invention serves as an attitude control device for extremely precise processing through maintaining the tool at a proper position or through giving slight displacement to the tool in advance.

Lift of Reference Numerals

| 1 | Structure | 1a | Flange |
|---|---|---|---|
| 1b | Flange | 1c | Fixing hole |
| 1d | Fixing hole | 2 | Cooling water channel |
| 2a | Inlet | 2b | Outlet |
| 3 | Heater | 4 | Laser measuring device |
| 4a | Light emitter | 4b | Light receiver |
| 5 | Laser measuring device | 5a | Light emitter |
| 5b | Light receiver | 6 | Structure |
| 7 | Actuator device | 7C | Cooling actuator |
| 7H | Heating actuator | 8 | Actuator device |
| 8C | Cooling actuator | 8H | Heating actuator |
| 9a | Structure | 9b | Structure |
| 11 | Actuator | 12 | Actuator |
| 13 | Actuator | 14 | Actuator |
| 11C | Cooling actuator | 12C | Cooling actuator |
| 13C | Cooling actuator | 14C | Cooling actuator |
| 11H | Heating actuator | 12H | Heating actuator |
| 13H | Heating actuator | 14H | Heating actuator |
| 15 | Cooling water channel | 16 | Actuator |
| 16a | Fixing hole | 17a | Inlet |
| 17b | Outlet | 18 | Structure |
| 18a | Compartment | 18b | Compartment |
| 18c | Compartment | 19 | Actuator |
| 17 | Cooling liquid channel | | |

13

| | | | |
|---|---|---|---|
| 18a | Compartment | 18b | Compartment |
| 18c | Compartment | 19 | Actuator |
| 19a | Head cover | 19b | End cover |
| 19c | End | 19d | End |
| 20 | Actuator | 20a | Head cover |
| 21 | Actuator | 21a | Head cover |
| 22 | Actuator | 22a | Head cover |
| 23 | Heat pipe | 24 | Heat exchanger |
| 25 | Sheath heater | 26 | Thermocouple |
| 27 | Expansion and contraction member | | |
| 28 | Heat insulator | | |
| 29a | Heat insulator | 29b | Heat insulator |
| 31 | Actuator | 32 | End cover |
| 33 | Sheath heater | | |
| 34 | Expansion and contraction member | | |
| 35 | Lid | 36 | Heat insulator |
| 37 | Expansion and contraction member | | |
| 38 | Heat insulator | 39 | Head cover |
| 41 | Heat pipe | 42 | Actuator |
| 43 | Head cover | 43a | End |
| 44 | End cover | 44a | End |
| 44b | Fixing hole | 45 | Heat insulator |
| 46 | Heat insulator | | |
| 47 | Expansion and contraction member | | |

| 47a | Hollow part | 48 | Disc |
| 49 | Heat pipe | 50 | Heat insulator |
| 51 | Sheath heater | 52 | Thermocouple |
| 54 | Actuator | 55 | End cover |
| 55b | End | 56 | End cover |
| 56b | End | 57 | Heat insulator |
| 58 | Heat insulator | | |
| 59 | Expansion and contraction member | | |
| 61 | Heat insulator | 62 | Heat pipe |
| 64 | Actuator | | |
| 65 | Expansion and contraction unit | | |
| 65a | Spiral groove | | |
| 65b | Spiral groove | 65c | Groove |
| 65d | Groove | 66 | Sheath heater |
| 67 | Cooing water pipe | 68 | Cooling water pipe |
| 69 | Cooing water pipe | 71 | Heat insulator |
| 72 | Heat insulator | 73 | Heat insulator |
| 74 | Pin fixing hole | 75 | Pin fixing hole |
| 76 | Single projection clevis | | |
| 77 | Double projection clevis | | |
| 78 | Thermocouple | 79 | Thermocouple |
| 81 | Structure | 82 | Actuator |
| 83 | Actuator | 84 | Actuator |
| 85 | Actuator | 86 | Actuator |

| | | | |
|---|---|---|---|
| 87 | Actuator | 88 | Actuator |
| 89 | Actuator | 91 | Actuator |
| 92 | Actuator | 93 | Actuator |
| 94 | Actuator | 95 | Actuator |
| 96 | Actuator | 97 | Actuator |
| 98 | Actuator | | |
| 100 | Box-shaped beam structure | | |
| 101 | Corner | 102 | Corner |
| 103 | Corner | 104 | Corner |
| 105 | Corner | 106 | Corner |
| 107 | Corner | 108 | Corner |
| 109 | Actuator | 110 | Actuator |
| 111 | Actuator | 112 | Actuator |
| 113 | Actuator | 114 | Actuator |
| 115 | Actuator | 116 | Actuator |
| 171 | Groove | | |
| 201 | Tool | 202 | Head |
| 203 | Tool driving motor | 204 | Column |
| 205 | Counter heater | 206 | Base |
| 207 | Balance weight | 208 | Driving mechanism |
| 211 | Tool | 212 | Head |
| 213 | Motor | 214 | Column |
| 215 | Servo motor | 216 | Ball screw |
| 217 | Tool holder | 218 | Table |

| 219 | Channel | 229 | Channel |
| 239 | Channel | 269 | Channel |
| 221 | Thermal actuator | 222 | Thermal actuator |
| 223 | Thermal actuator | 224 | Thermal actuator |
| 225 | Thermal actuator | 226 | Thermal actuator |
| 227 | Thermal actuator | 228 | Thermal actuator |
| 231 | Thermal actuator | 232 | Thermal actuator |
| 233 | Thermal actuator | 234 | Thermal actuator |
| 241a | Cooling thermal actuator | | |
| 244a | Cooling thermal actuator | | |
| 245a | Cooling thermal actuator | | |
| 246a | Cooling thermal actuator | | |
| 247a | Cooling thermal actuator | | |
| 248a | Cooling thermal actuator | | |
| 241b | Heating thermal actuator | | |
| 242b | Heating thermal actuator | | |
| 243b | Heating thermal actuator | | |
| 244b | Heating thermal actuator | | |
| 255a | Cooling thermal actuator | | |
| 256a | Cooling thermal actuator | | |
| 257a | Cooling thermal actuator | | |
| 258a | Cooling thermal actuator | | |
| 251b | Heating thermal actuator | | |
| 252b | Heating thermal actuator | | |

| | |
|---|---|
| 253b | Heating thermal actuator |
| 254b | Heating thermal actuator |
| 255b | Heating thermal actuator |
| 256b | Heating thermal actuator |
| 257b | Heating thermal actuator |
| 258b | Heating thermal actuator |
| 261b | Heating thermal actuator |
| 262b | Heating thermal actuator |
| 263b | Heating thermal actuator |
| 264b | Heating thermal actuator |
| 264a | Cooling thermal actuator |
| 265a | Cooling thermal actuator |
| 266a | Cooling thermal actuator |
| 267a | Cooling thermal actuator |
| 271b | Heating thermal actuator |
| 272b | Heating thermal actuator |
| 273b | Heating thermal actuator |
| 274b | Heating thermal actuator |
| 275b | Heating thermal actuator |
| 276b | Heating thermal actuator |
| 277b | Heating thermal actuator |
| 278b | Heating thermal actuator |
| 272a | Cooling thermal actuator |
| 273a | Cooling thermal actuator |

| 274a | Cooling thermal actuator | | |
| 275a | Cooling thermal actuator | | |
| 276a | Cooling thermal actuator | | |
| 277a | Cooling thermal actuator | | |
| S1 | Displacement sensor | S2 | Displacement sensor |
| S3 | Displacement sensor | S4 | Displacement sensor |
| S7 | Displacement sensor | S8 | Displacement sensor |
| S11 | Displacement sensor | S12 | Displacement sensor |
| S21 | Displacement sensor | S22 | Displacement sensor |
| S23 | Displacement sensor | S24 | Displacement sensor |
| S25 | Displacement sensor | S26 | Displacement sensor |
| S27 | Displacement sensor | S28 | Displacement sensor |
| S51 | Temperature compensated displacement sensor | | |
| S52 | Temperature compensated displacement sensor | | |
| S53 | Temperature compensated displacement sensor | | |
| S54 | Temperature compensated displacement sensor | | |
| S55 | Temperature compensated displacement sensor | | |
| S56 | Temperature compensated displacement sensor | | |
| S57 | Temperature compensated displacement sensor | | |
| W | Workpiece | | |

## Claims

1. An attitude control device for a structure comprising actuators which are installed on a structure having a high rigidity and deform the structure in the range of elastic or thermal deformation,
displacement sensors to detect the displacement amount at the deformed area of the structure deformed by said actuators, and
a controller which generates actuator driving signals to maintain the length of the structure as desired based on the displacement amount detected by said displacement sensors.

2. An attitude control device for a structure comprising actuators which are co-axially installed on a bar-shaped structure under tensile load or compressive load in axial direction and axially deform the structure in the range of elastic or thermal deformation,
displacement sensors to detect axial displacement amount of the structure, and
a controller which generates actuator driving signals to maintain the length of said structure as desired based on the displacement amount detected by said displacement sensors.

3. An attitude control device for a structure of Claim 2 wherein the actuators are arranged so that the axial displacement is caused by heating or cooling the structure itself from outside or inside.

4. An attitude control device for a structure comprising a pair of actuators which are installed on opposing side walls of a hollow pipe-like structure in parallel with the side walls and axially deform the corresponding side walls of the structure in the range of elastic or thermal deformation,
displacement sensors installed on the side walls where said actuators are mounted to detect the axial displacement of the structure, and
a controller which separately generates driving signals for each actuator to maintain the length or attitude of said structure as desired based on the displacement amount detected by said displacement sensors.

5. An attitude control device for a structure configured by stacking two structure attitude control devices of Claim 4 with their walls having actuators faced in the same direction.

6. An attitude control device for a structure comprising four actuators which are installed on side walls of a hollow pipe-like structure having four faces in parallel with the side walls and axially deform the corresponding side wall of the structure in the range of elastic or thermal deformation,
displacement sensors installed on the side walls where said actuators are mounted to detect axial displacement amount of the structure, and
a controller which separately generates actuator driving signals for each actuator to maintain the length or attitude of said structure as desired based on the displacement amount detected by said displacement sensors.

7. An attitude control device for a structure configured by stacking two structure attitude control devices of Claim 6 with the walls having actuators faced in the same direction.

8. An attitude control device for a structure comprising a plurality of actuators which are installed on side walls of a hollow pipe-like structure or a cylindrical structure equally dividable into three or five or more areas on circumference in parallel with the side walls and axially deform said side walls of the structure in the range of elastic or thermal deformation,
displacement sensors installed on the side walls provided with actuators to detect axial displacement amount of the structure and
a controller which separately generates driving signals for each actuator to maintain the length or attitude of said structure as desired based on the displacement amount detected by said displacement sensors.

9. An attitude control device for a structure configured by stacking two structure attitude control devices of Claim 8.

10. An attitude control device for a structure comprising a plurality of actuators which are installed in parallel on all or some of the walls constituting a hollow polyhedron structure configured as a rectangular parallelepiped or other polyhedron and deform corresponding walls of the structure in the range of elastic or thermal deformation in one or two directions parallel with the walls,
displacement sensors installed on the walls provided with said actuators to detect the displacement amount in the action direction of the actuators on walls and
a controller which separately generates driving signals for each actuator to maintain the length or attitude of said structure as desired based on displacement amount detected by said displacement sensors.

11. An attitude control device for a structure of Claim 1, 2, 4, 5, 6, 7, 8, 9 or 10 wherein the actuators are configured by hydraulic cylinders.

12. An attitude control device for a structure of Claim 4, 5, 6, 7, 8 or 9 wherein the actuators installed in parallel with side walls of a hollow pipe-like structure are configured by heating source and cooling source which expand or contract the side walls themselves by heating or cooling.

13. An attitude control device for a structure of Claim 10 wherein the actuators installed in parallel with the walls constituting a hollow polyhedron structure are configured by heating source and cooling source which expand or contract the walls themselves by heating or cooling.

**14.** An attitude control device for a machine tool comprising

at least a pair of thermal column actuators which is opposingly disposed on circumference of a hollow column fixing and supporting a head to hold and drive a tool to a fixing base and which heats or cools column walls to generate thermal displacement,

displacement sensors installed on the column walls provided with thermal column actuators to detect the displacement amount at the column walls caused by temperature change or reaction force at tool during processing and

a controller which outputs thermal actuator controlling signals to expand or contract the column so as to maintain the tool position as predetermined corresponding to the displacement amount detected by said displacement sensors.

**15.** An attitude control device for a machine tool comprising

at least a pair of thermal column actuators which is opposingly disposed on circumference of a hollow column fixing and supporting a head to hold and drive a tool to a fixing base and which heats or cools column walls to generate thermal displacement,

displacement sensors installed on the head walls to detect the displacement amount at the head walls caused by temperature change or reaction force at tool during processing,

another set of displacement sensors installed on the column walls provided with thermal column actuators to detect the displacement amount at the column walls caused by temperature change or reaction force at tool during processing and

a controller which outputs thermal actuator controlling signals to expand or contract the column so as to maintain the tool position as predetermined corresponding to the displacement amounts detected by said two sets of displacement sensors.

**16.** An attitude control device for a machine tool comprising

at least a pair of thermal head actuators which is opposingly disposed on circumference of a head for holding and driving of a tool and which heats or cools walls of the head to generate thermal displacement,

at least a pair of thermal column actuators which is opposingly disposed on circumference of a hollow column fixing and supporting the head to a fixing base and which heats or cools column walls to generate thermal displacement,

displacement sensors installed on the head walls provided with thermal head actuators to detect the displacement amount at the head walls caused by temperature change or reaction force at tool during processing,

another set of displacement sensors installed on the column walls provided with thermal column actuators to detect the displacement amount at the column walls caused by temperature change or reaction force at tool during processing and

a controller which outputs thermal actuator controlling signals to expand or contract the column or the head so as to maintain the tool position as predetermined corresponding to the displacement amounts detected by said two sets of displacement sensors.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24

Fig. 25

Fig. 26

Fig. 27

Fig. 28

Fig. 29

Fig. 30

F i g . 3 1

F i g . 3 2

Fig. 33

Fig. 34

Fig. 35

Fig. 36

Fig. 37

Fig. 38

Fig. 39

# INTERNATIONAL SEARCH REPORT

International Application No  PCT/JP91/00972

**I. CLASSIFICATION OF SUBJECT MATTER** (if several classification symbols apply, indicate all) [6]

According to International Patent Classification (IPC) or to both National Classification and IPC

Int. Cl[5]  B23Q15/18, B23Q1/02

**II. FIELDS SEARCHED**

| | Minimum Documentation Searched [7] |
|---|---|
| Classification System | Classification Symbols |
| IPC | B23Q15/18, B23Q1/02, B23Q11/12, 14 |

Documentation Searched other than Minimum Documentation
to the Extent that such Documents are Included in the Fields Searched [8]

| | |
|---|---|
| Jitsuyo Shinan Koho | 1960 - 1991 |
| Kokai Jitsuyo Shinan Koho | 1974 - 1991 |

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| Y | JP, A, 52-144880 (Hitachi Seiki Co., Ltd.), December 2, 1977 (02. 12. 77), (Family: none) | 1-16 |
| Y | JP, A, 58-94957 (Hitachi Seiko Ltd.), June 6, 1983 (06. 06. 83), (Family: none) | 1-16 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| September 26, 1991 (26. 09. 91) | October 14, 1991 (14. 10. 91) |
| International Searching Authority | Signature of Authorized Officer |
| Japanese Patent Office | |

Form PCT/ISA/210 (second sheet) (January 1985)